# EUROPEAN PATENT APPLICATION

(11) **EP 0 825 227 A1**
(43) Date of publication of application: **25.02.1998**
(21) Application number: 97114334.2
(22) Date of filing: 20.08.1997
(51) Int. Cl.: C08L 9/00, C08L 53/02

(54) **Thermoplastic elastomer composition**

(30) Priority: 23.08.1996 JP 222847/96
(71) Applicant: UBE INDUSTRIES, LTD., Ube-shi, Yamaguchi-ken 755 (JP)
(72) Inventor: Okamoto, Noami, c/o Ube Industries, Ltd., Ichihara City, Chiba Pref. (JP); Shoda, Takeshi, c/o Ube Industries, Ltd., Ichihara City, Chiba Pref. (JP); Yamamoto, Shinji, c/o Ube Industries, Ltd., Ichihara City, Chiba Pref. 290 (JP)
(74) Representative: Wössner, Gottfried

(57) **Abstract**

A thermoplastic elastomer composition having excellent reinforcing effect, modulus of elasticity and tensile strength, a reduced permanent set an enhanced dimensional stability, and capable of being cross-linked by electron beam irradiation, includes 40 to 95 parts by weight of a thermoplastic elastomer containing polymerized isoprene chain segments and 60 to 5% by weight of a syndiotactic 1,2-polybutadiene resin with a melting temperature of 110°C or more.

## Description

### BACKGROUND OF THE INVENTION

### 1. Field of the Invention

The present invention relates to a thermoplastic elastomer composition. More particularly, the present invention relates to a thermoplastic elastomer composition in which a thermoplastic elastomer having polymerized isoprene chain segments is reinforced by a syndiotactic 1,2-polybutadiene resin. The thermoplastic elastomer composition of the present invention is useful for producing a shaped article having high tensile strength and modulus of elasticity, a low permanent set and a satisfactory dimensional stability.

### 2. Description of Related Art

It is known that thermoplastic elastomers are advantageous in that they can be shaped by conventional shaping process for conventional thermoplastic resins and the resultant articles have an appropriate rubber elasticity, even when a cross-linking agent and a vulcanization procedure which are necessary for processing conventional rubber materials are not applied.

However, it is also known that the shaped articles of the conventional thermoplastic elastomers are disadvantageous in that they have an unsatisfactory hardness and a low mechanical strength, especially, a low fracture strength.

Japanese Examined Patent Publication No. 60-26,428 discloses a thermoplastic elastomer composition comprising an thermoplastic elastomer comprising an aromatic vinyl compound-butadiene block copolymer and an 1,2-polybutadiene having a crystallinity of 5 to 50%.

This thermoplastic elastomer is, however, unsatisfactory in an insufficient mechanical strength thereof derived from the low crystallinity of the 1,2-polybutadiene.

### SUMMARY OF THE INVENTION

An object of the present invention is to provide a thermoplastic elastomer composition useful for producing a shaped article therefrom having high modulus of elasticity and mechanical strength, a low permanent set and a satisfactory dimensional stability.

The above-mentioned object can be attained by the thermoplastic elastomer composition of the present invention which comprises (A) a thermoplastic elastomer containing polymerized isoprene chain segments and (B) a syndiotactic 1,2-polybutadiene resin having a melting temperature of 110°C or more.

In an aspect of the present invention, a shaped article is formed from the thermoplastic elastomer composition of the present invention as mentioned above and cross-linked with irradiation of electron beam at a dose of 50 Mrad or less.

### BRIEF DESCRIPTION OF THE DRAWING

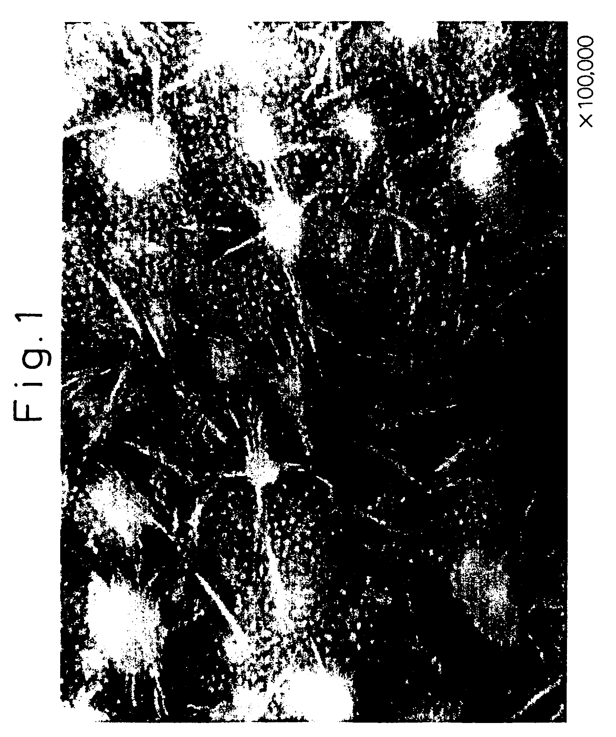

Figure 1 is an electron microscopic photograph at a magnification of 100,000, of a thermoplastic elastomer composition sheet of Example 2, which photograph shows the form of fine composite crystals of the SPBD resin (B) dispersed in a thermoplastic elastomer (A) matrix.

### DESCRIPTION OF THE PREFERRED EMBODIMENTS

The components from which the thermoplastic elastomer composition of the present invention are constituted will be explained in detail below.

The thermoplastic elastomer composition of the present invention comprises (A) a thermoplastic elastomer containing polymerized isoprene chain segments; and (B) a syndiotactic 1,2-polybutadiene resin having a melting temperature of 110°C or more.

### (A) Thermoplastic elastomer component

The component (A) consists of at least one thermoplastic elastomer which is characterized in that the thermoplastic elastomer molecules have, as soft segments of the molecules, rubber moieties consisting of polymerized isoprene chains. The thermoplastic elastomer component (A) preferably comprises at least one member selected from the group consisting of (1) polystyrene-polyisoprene-polystyrene block copolymers, (2) block copolymers wherein all or a portion of the styrene units in the above-mentioned block copolymers (1) are substituted by α-methylstyrene units, and (3) hydrogenation products of the above-mentioned block copolymers (1) and (2). The thermoplastic elastomer component (A) usable for the present invention are not limited to those mentioned above. The above-mentioned copolymers may be used alone or in mixture of two or more thereof.

### (B) Syndiotactic 1,2-polybutadiene resin component

The component (B) consists of at least one syndiotactic 1,2-polybutadiene (SPBD) resin having a melting temperature of 110°C or more. The melting temperature of the SPBD resins is preferably 130 to 200°C, more preferably 140 to 200°C. If the melting temperature of the SPBD resins is less than 110°C, the SPBD resins has a low crystallinity and thus exhibits an unsatisfactory reinforcing performance, and a low heat resistance. The SPBD resins having a melting temperature of 110°C can be used alone or in mixtures of two or more of the SPBD resins different in melting temperature from each other.

The 1,2-structure content of the SPBD having a melting temperature of 110°C and usable for the present invention can be determined by recording a ¹H-NMR spectrum of the SPBD resin and measuring the peak area of the spectrum. The syndiotactic structure (syndiotacticity) of the SPBD resins can be determined from a ¹³C-NMR spectrum thereof. The structure other than the 1,2-structure contained in the SPBD resin is generally cis-1,4-structure. The 1,2-structure content of the SPBD resins usable for the present invention is preferably 76% or more, more preferably 82% or more, still more preferably 84% or more. If the 1,2-structure content of the SPBD resin is less than 76%, the SPBD resin may have an insatisfactory crystallinity and thus may exhibit insufficient reinforcing performance and a low heat resistance.

The SPBD resins can be produced by any conventional method as disclosed, for example, in Japanese Examined Patent Publication No. 53-39,917, No. 54-5436, No. 56-18,005, and No. 62-58613 and Japanese Unexamined Patent Publication No. 6-293,852. However, the method for producing the SPBD resins is not limited to those methods disclosed in the above-mentioned publications.

In the thermoplastic elastomer composition of the present invention, the SPBD resins are in the form of composite crystals each comprising a spherical core particle portion having an average particle size of 0.05 to 0.5 µm and a plurality of needle crystal portions having an average thickness of 0.005 to 0.05 µm and an average length of 0.1 to 0.5 µm and extending radiately from the spherical core particle portion.

The proportions of the component (A) and the component (B) will be explained below.

In the thermoplastic elastomer Composition of the present invention, the thermoplastic elastomer component (A) and the SPBD resin component (B) are preferably present respectively in contents of 40 to 95 parts and 60 to 5 parts, per 100 parts by weight of the total thermoplastic elastomer composition. If the content of the component (A) is too small and thus the content of the component (B) is too large, the resultant thermoplastic elastomer composition may exhibit an unsatisfactory rubber elasticity. Also, if the content of the component (A) is too large and thus the content of the component (B) is too small, the resultant thermoplastic elastomer composition may exhibit an insufficient reinforcing performance.

In an aspect of the present invention, the thermoplastic elastomer composition can be formed into an shaped article. The shaped article can be processed by irradiating electron beam thereto, to cross-link the polymers therein and to enhance a permanent set property, namely setting property, of the shaped article. The irradiation of electron beam is preferably carried out at a dose of 50 Mrad or less.

The thermoplastic elastomer composition of the present invention may further contain conventional additives usable for usual rubber or resin compositions, for example, additional polymers other than the components (A) and (B), carbon black, anti-aging agents and cross-linking agent. There is no limitation to the content of the additives in the composition, unless the additives affect the thermoplastic elastomer composition of the present invention.

The thermoplastic elastomer composition of the present invention can be prepared by mixing and kneading the components (A) and (B) at a temperature equal to or higher than the melting temperature of the SPBD resin component (B) by using a mixing and kneading apparatus usable for conventional rubber or resin compositions. The mixing and kneading apparatus may be selected from batch type apparatuses, for example, a Banbury type mixer, a kneader, a kneader-extruder and open rolls, and continuous mixing and kneading apparatuses, for example, an extruder and a rotor type continuous kneader. The thermoplastic elastomer composition of the present invention can be formed into any shaped articles by a conventional shaping method, for example, injection molding, calendering, compression molding, blow molding, foaming or transfer molding methods.

### EXAMPLES

The present invention will be further illustrated by the following examples which do not intend to limit the scope of the present invention in any way.

In the examples and comparative examples, the melting temperature and 1,2-structure content of the SPBD resins, and the tensile properties (stress, strength, ultimate elongation and elongation set), die swell and dispersion conditions of the thermoplastic elastomer compositions, were measured by the following test methods.

### (1) Melting temperature

The melting temperature of each SPBD resin component (A) was determined from an endothermic peak measured by a heat flux differential scanning calorimeter (model: DSC 50, made by K.K. Simazu Seisakusho) by rising the temperature of a test sample from 30°C to 230°C at a temperature rising rate of 10°C/minute.

### (2) Content of 1,2-structure

The 1,2-structure content of syndiotactic 1,2-polybutadiene resin was determined by a ¹H-NMR spectral method (solvent: o-dichlorobenzene, based on TMS) using a nuclear magnetic resonance spectrometer (model: FX-200, made by Nihon Denshi K.K.).

Also, it was confirmed by a ¹³C-NMR spectrum that the 1,2-structure has a syndiotactic structure.

### (3) Tensile stress, tensile strength and ultimate elongation

In accordance with Japanese Industrial Standard (JIS) K 6301, an thermoplastic elastomer composition was shaped into a No. 3 dumbbell, and subjected to the measurement of a 100% tensile stress, a 300% tensile stress, a tensile strength and an ultimate elongation thereof.

### (4) Permanent set

In accordance with JIS K 6301, a thermoplastic elastomer composition was shaped into a No. 1 dumbbell and subjected to the measurement of a permanent set thereof.

### (5) Die Swell

A thermoplastic elastomer composition was extruded at a temperature of 190°C through a die having a diameter of 1 mm by using a capillary rheometer made by Intesco Co., to measure a die swell of the composition.

Each die swell value was represented by an index based on the die swell value of Comparative Example 1 which was represented by 100. The smaller the index, the smaller the die swell and thus the higher the dimensional stability of the thermoplastic elastomer composition.

### (6) Dispersing conditions

A specimen of a thermoplastic elastomer composition was dyed with osmium tetraoxide, and cut into super thin sections, and the sections were observed by a transmission type electron microscope (model: H-7100, made by Hitachi Seisakusho), to evaluate the dispersion of the syndiotactic 1,2-polybutadiene resin component (B) in the thermoplastic elastomer composition.

### Referential Examples 1 to 4

In Referential Examples 1 to 4, four different types of SPBD resins for the examples and comparative examples were prepared by the following procedures.

In each of Referential Examples 1 to 4, an autoclave with a capacity of 1.5 liters was charged with 760 ml of dehydrated benzene and 74g of 1,3-butadiene were dissolved in the dehydrated benzene. Further, the solution was added with 1 m mole of cobalt octoate (in the state of a solution in benzene in a concentration of 1 m mole/ml), and the mixture was stirred for one minute, and then added with 2 m moles of triethyl aluminum (in the state of a solution in benzene in a concentration of 1 m mole/ml). Then, one minute after the addition, the mixture was added with acetone in the amount shown in Table 1. Further, one minute after the addition of aceton, the mixture was added with 0.6 m mole of carbon disulfide (in the rate of a solution in benzene in a concentration of 0.3 m mole/ml), and the resultant mixture was stirred at a temperature of 10°C for one hour, to polymerize 1,3-butadiene into a SPBD resin. The resultant solution of the SPBD resin was added with 0.75g of 2,4-di-tert-butyl-p-cresol. The resultant mixture was introduced dropwise into one liter of methyl alcohol to cause the SPBD resin to precipitate. The precipitated SPBD resin was collected by filtration, rinsed in one liter of methyl alcohol with stirring, collected by filtration and dried at room temperature under vacuum. The resultant SPBD resin had the melting temperature and the 1,2-structure content as shown in Table 1.

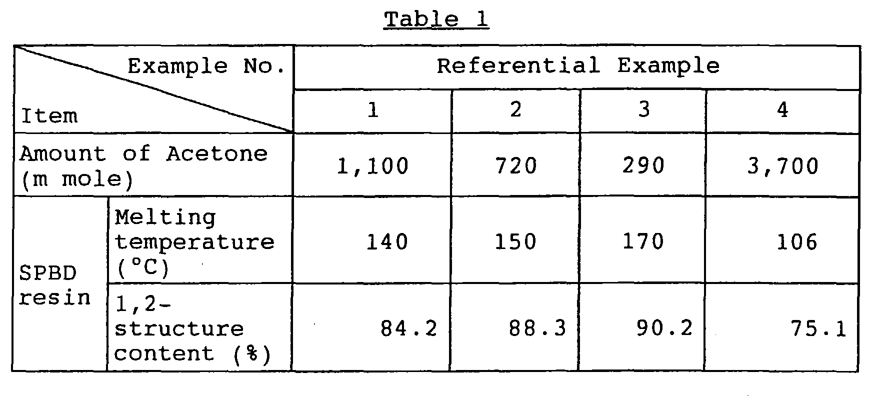

### Examples 1 to 5

In each of Examples 1 to 5, a thermoplastic polystyrene-polyisoprene-polystyrene copolymer elastomer having a polymerized styrene content of 15% by weight, a polymerized isoprene content of 85% by weight and a melt flow index (MFI) of 2g/10 min determined at a temperature of 190°C (Trademark: JSR-SIS5000, made by Nihon Goseigomu K.K.) and the same SPBD resin as shown in Table 1 were mixed in the amounts as shown in Table 2 at a temperature of 150°C (which was 10°C above the melting temperature of the SPBD used) in a laboratory plasto-mill with a capacity of 250 ml and mixture was kneaded at a temperature of 150°C for 3 minutes. The kneaded mixture was placed in a mold and pressed at a temperature of 180°C for 2 minutes to form a sheet of the thermoplastic elastomer composition, having a thickness of 2 mm. The results of tensile test of the sheet and the die swell test are shown in Table 2.

The thermoplastic elastomer composition sheet of Example 2 was photographed by a transmission type electron microscope. The photograph is shown in Figure 1. In Fig. 1, it is observed that a plurality of fine composite crystals of the SPBD resin (B), each comprising a spherical core particle portion having an average particle size of about 0.1 µm and a plurality of needle crystal portions having an average thickness of about 0.01 µm and an average length of about 0.2 µm and extending radiately from the spherical core particle portion, are uniformly dispersed in a matrix consisting of the thermoplastic elastomer (A).

### Comparative Example 1

The same polystyrene-polyisoprene-polystyrene copolymer elastomer (JSR-SIS, made by Nihon Goseigomu K.K.) as in Example 1 was placed in the mold and pressed at a temperature of 180°C for 2 minutes in the same manner as in Example 1, to provide a sheet with a thickness of 2 mm.

The tensile test results and the die swell test results are shown in Table 2.

### Comparative Example 2

A thermoplastic elastomer composition sheet was produced by the same procedures as in Example 2, except that the SPBD resin prepared in Referential Example 1 was used in the amount as shown in Table 2, in place of the SPBD resin prepared in Referential Example 2.

The test results are shown in Table 2.

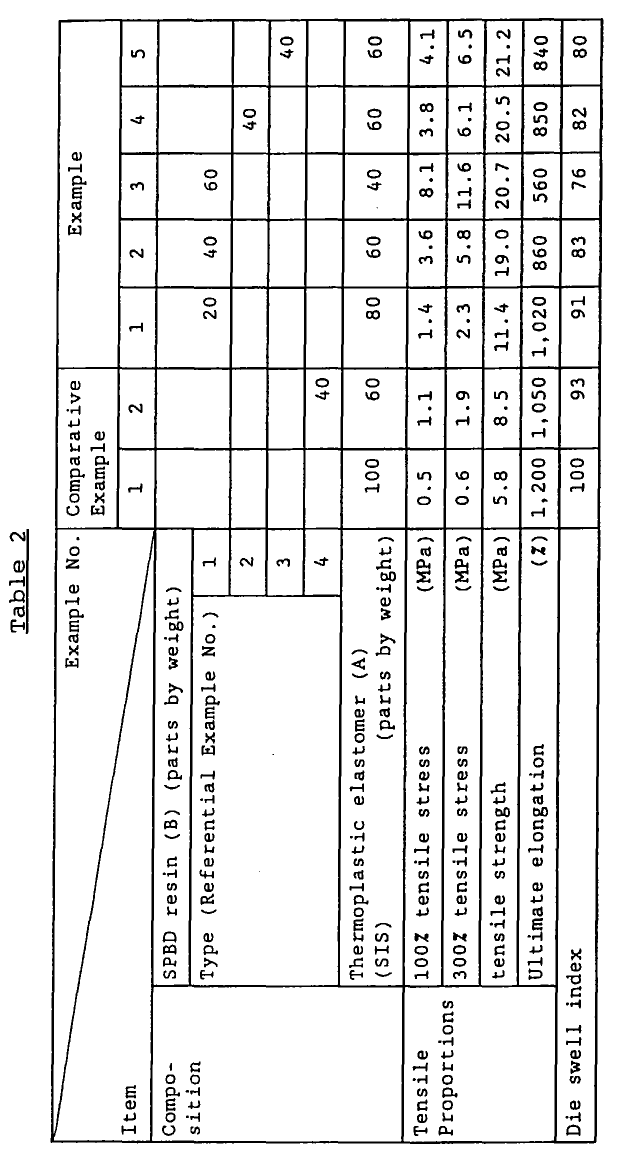

Table 2 shows that the thermoplastic elastomer composition sheets of Examples 1 to 5 in accordance with the present invention exhibit higher tensile stress and tensile strength and a higher dimensional stability than those of Comparative Examples 1 and 2.

### Examples 6 and 7

In each of Examples 6 and 7, a thermoplastic elastomer composition sheet was produced by the same procedures as in Example 1, except that the thermoplastic elastomer composition was prepared in the composition as shown in Table 3, and the resultant sheet was subjected to an electron beam irradiation at the dose as shown in Table 3. The resultant electron beam-irradiated sheet was subjected to the tests. The test results are shown in Table 3.

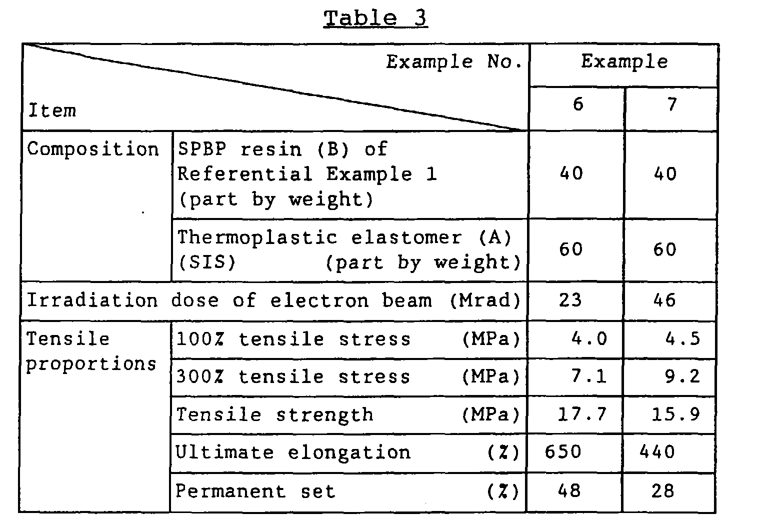

Table 2 shows that the irradiation of electron beam to the thermoplastic elastomer composition article of the present invention creates cross-linkages between polymer molecules and cause the sheet to exhibit a reduced permanent set.

The thermoplastic elastomer composition of the present invention has a significantly enhanced reinforcing effect for rubber and resin materials modulus of elasticity, and tensile strength and exhibits a reduced die swell index and an enhanced dimensional stability.

By applying an electron beam irradiation to a shaped article produced from the thermoplastic elastomer composition of the present invention, the polymers in the shaped article are cross-linked and thus the permanent set of the shaped article is reduced and the resistance of the shaped article to setting is enhanced.

## Claims

1. A thermoplastic elastomer composition comprising (A) a thermoplastic elastomer containing polymerized isoprene chain segments and (B) a syndiotactic 1,2-polybutadiene resin having a melting temperature of 110°C or more.

2. The thermoplastic elastomer composition as claimed in claim 1, wherein
(1) the thermoplastic elastomer (A) is present in an amount of 40 to 95 parts by weight, and
(2) the syndiotactic 1,2-polybutadiene (B) is present in an amount of 60 to 5 parts by weight,
per 100 parts by weight of the total thermoplastic elastomer composition.

3. The thermoplastic elastomer composition as claimed in claim 1, wherein the syndiotactic 1,2-polybutadiene resin (B) is in the form of composite crystals each comprising a spherical core particle portion having an average particle size of 0.05 to 0.5 µm and a plurality of needle crystal portions having an average thickness of 0.005 to 0.05 µm and an average length of 0.1 to 0.5 µm and extending radiately from the spherical core particle portion.

4. The thermoplastic elastomer composition as claimed in claim 1, wherein the syndiotactic 1,2-polybutadiene resin (B) has a content of 1,2-structure of 76% or more.

5. The thermoplastic elastomer composition as claimed in claim 1, wherein the thermoplastic elastomer (A) comprises at least one member selected from the group consisting of (1) polystyrene-polyisoprene-polystyrene block copolymers, (2) block copolymers wherein all or a portion of the styrene units in the above-mentioned block copolymers (1) are substituted by α-methylstyrene units, and hydrogenation products of the above-mentioned block copolymers (1) and (2).

6. A shaped article formed from the thermoplastic elastomer composition as claimed in any of claims 1 to 5 and cross-linked with irradiation of electron beam at a dose of 50 Mrad or less.
